# EUROPÄISCHE PATENTANMELDUNG

(11) **EP 1 475 612 A2**
(43) Veröffentlichungstag der Anmeldung: **10.11.2004**
(21) Anmeldenummer: 04010530.6
(22) Anmeldetag: 04.05.2004
(51) Int. Cl.: G01D 5/20

(54) **Geberrad für eine Wirbelstromsensoranordnung**

(30) Priorität: 09.05.2003 DE 10320941
(71) Anmelder: ZF Sachs AG, 97424 Schweinfurt (DE)
(72) Erfinder: Welke, Knut, 97529 Sulzheim (DE); Niehaus, Udo, 97453 Schonungen (DE); Tareilus, Alfred, 97422 Schweinfurt (DE)

(57) **Zusammenfassung**

Es wird ein Geberrad für eine Wirbelstromsensoranordnung beschrieben, welche eine Konturspur aus einem elektrisch leitfähigen Material umfasst, die an einer rotierenden Komponente angeordnet ist und von einem zu dieser ortsfesten Wirbelstromsensor zur Erfassung einer Drehbewegungsinformation abgetastet wird. Die Erfindung schlägt vor, an dem Geberrad eine Tragestruktur aus einem Metall-Kunststoff-Verbundelement mit einem Metallring und einen diesen zumindest teilweise umgebenden Kunststoffmantel auszubilden und die Konturspur auf dem Kunststoffmantel anzuordnen. Durch diese Ausgestaltung können die Tragestruktur und die Konturspur im Wesentlichen voneinander unabhängig an jeweils bestehende Erfordernisse optimal angepasst und eine insgesamt gewichtsoptimierte Anordnung erzielt werden.

## Beschreibung

Die Erfindung betrifft ein Geberrad für eine Wirbelstromsensoranordnung gemäß dem Oberbegriff des Patentanspruchs 1.

Wirbelstromsensoren sind aus der physikalischen Messtechnik generell bekannt. Diese umfassen als wesentliche Funktionselemente eine Primär- und eine Sekundarspule, ein Geberrad sowie eine Auswerteeinrichtung. Die Primärspule wird zu hochfrequenten Schwingungen angeregt und induziert dabei in der Sekundärspule eine Spannung, wobei bei Anwesenheit eines elektrisch leitfähigen Geberrades Wirbelstromverluste erzeugt werden, welche eine Phasenverschiebung zwischen der Treiberspannung und der induzierten Spannung bewirken. Diese Phasenverschiebung wird in der Auswerteeinrichtung zu einer Information über die gegenseitige Position und/oder die Geschwindigkeit von Geberrad und Sensor verarbeitet. Derartige Wirbelstromsensoren, wie diese beispielsweise von der VOGT E-lectronic AG hergestellt werden, finden z.B. in der Automobilindustrie Anwendung als Nockenwellen- oder Kurbelwellensensor oder als Rotorlagegeber für einen Kurbelwellen-Starter-Generator, welcher die bisherigen elektrischen Funktionseinheiten Anlasser und Generator in sich vereint und in einem Kraftfahrzeug axial zwischen Verbrennungsmotor und Getriebe angeordnet werden kann. Die bei den genannten Anwendungen bisher verwendeten Geberräder sind als Massivteile vollständig aus einem Metallwerkstoff z.B. als Gußteil gefertigt. Beim Betreiben der entsprechenden Funktionseinheiten können aufgrund erhöhter Temperaturen, hoher Drehzahlen und der relativ großen Durchmesser erhebliche Kräfte an einem Geberrad auftreten, die dessen Verzug und dadurch fehlerhafte Sensorsignale zur Folge haben können.

Aufgabe der Erfindung ist es, ein Geberrad für eine Wirbelstromsensoranordnung bereitzustellen, das gewichtsreduziert und dennoch gegenüber äußeren Einflüssen besonders formstabil ist.

Die der Erfindung zugrunde liegende Aufgabe wird gelöst durch ein die Merkmale des Patentanspruchs 1 aufweisendes Geberrad. Vorteilhafte Weiterbildungen und Ausgestaltungen der Erfindung sind in den Unteransprüchen angegeben.

Das erfindungsgemäße Geberrad weist eine Tragestruktur aus einem Metall-Kunststoff-Verbundelement mit einem Metallring und mit einem diesen zumindest teilweise umgebenden Kunststoffmantel auf, auf dem die Konturspur angeordnet ist. Durch die funktionelle Aufteilung eines Geberrades in eine Tragestruktur und eine daran angeordnete Konturspur können beide Teile zunächst getrennt und im Wesentlichen voneinander unabhängig an die jeweiligen Erfordernisse angepasst und hergestellt werden. Die als Metall-Kunststoff-Verbundbauweise ausgeführte tragende Struktur ist sehr leicht und auch unter dem Einfluss hoher Umgebungstemperaturen und hoher Drehzahlen äußerst formstabil. Als Metall findet vorzugsweise Stahl Verwendung, welcher für das thermische Ausdehnungsverhalten des Geberrades bestimmend ist.

Gemäss Anspruch 2 ist vorgesehen, dass der Kunststoffmantel an seiner Außenfläche eine Aussparung aufweist, in der die Konturspur angeordnet ist. Damit kann der Konturspur auf dem Geberrad eine definierte axiale Lage zugeordnet und diese zumindest teilweise von äußeren Einflüssen geschützt angeordnet werden.

Mit Vorteil ist gemäss Anspruch 3 die Konturspur als Folie ausgebildet, welche bei einer Serienfertigung in einem automatisierten Prozess besonders einfach am Kunststoffmantel als Klebe- oder Prägeteil aufgebracht werden kann, wie dieses Anspruch 4 vorsieht.

Günstigerweise umfasst die Konturspur nach Anspruch 5 eine Mehrzahl von identischen, räumlich voneinander getrennten Einzelelementen. Durch diese Ausbildung kann eine volle Umdrehung der rotierenden Komponente in eine Vielzahl von identischen Abschnitten bzw. Perioden zerlegt werden, was insbesondere einen Vorteil bei der Ansteuerung einer Drehfeldwicklung einer elektrischen Maschine und bei der Ermittlung von momentanen Drehzahlen der rotierenden Komponente darstellt. In Weiterer Hinsicht können dadurch insbesondere Fehlpassungen des Anfangs- zum Endbereich, wie sich diese bei der Aufbringung einer flächenhaft geschlossenen Konturspur ergeben können, vermieden werden.

Gemäss Anspruch 6 wird vorgeschlagen, den Metallring durch Rollieren eines gestanzten Metallbandes zu erzeugen. Die Endbereiche des Bandes können stoffoder formschlüssig zu einem geschlossenen Ring zusammengefügt werden.

Bei einer weiteren Variante der Erfindung gemäss Anspruch 7 bietet es sich an, den Metallring integral mit der rotierenden Komponente auszubilden. Dadurch kann auf einen zusätzlichen Ring und auf dessen Montage an der rotierenden Komponente verzichtet werden.

Zur Erzielung einer besonders stabilen Verbundelementkonstruktion weist gemäss der Ausgestaltung des Anspruchs 8 der Metallring Verankerungselemente zur drehfesten und axial gesicherten Anordnung des Kunststoffmantels auf. Die Verankerungselemente werden von dem Kunststoffmantel so durchdrungen bzw. umschlossen, dass ein unbeabsichtiges Lösen selbst bei extrem hohen Drehzahlen und erhöhten Temperaturen ausgeschlossen ist.

Zur Versteifung des Metallringes und zur definierten axialen Festlegung an der rotierenden Komponente ist nach Anspruch 9 an dem Metallring ein sich radial erstreckender Abschnitt vorgesehen. Das Geberrad kann somit auf die Rotorkomponente bspw. durch axiales Aufpressen soweit aufgeschoben werden bis der als Anschlag wirkende Anlagebereich an einer Gegenanlagefläche der Rotorkomponente zur Anlage kommt.

Mit Vorteil sieht Anspruch 10 vor, den Kunststoffmantel als Spritzgussteil zu fertigen. Ein derartiger, aus einem thermoplastischen Werkstoff gefertigter Mantel weist eine sehr hohe Formtreue und eine besonders hohe Oberflächengüte auf. Durch die nachträgliche Ausbildung des Kunststoffmantels können bestimmte Fertigungstoleranzen des Metallringes höher gewählt werden.

Gemäss Anspruch 11 ist als Material für den Kunststoffmantel ein im Wesentlichen elektrisch nicht leitfähiger Kunststoff vorgesehen. Zur Gewinnung eines rauscharmen Messsignals ist die Ausdehnung des Kunststoffmantels in Wirkrichtung des Wirbelstromsensors so bemessen, dass der Metallring im Wesentlichen außerhalb des Wirkungsbereichs des Wirbelstromsensors angeordnet ist.

Die Erfindung wird nachfolgend mit Bezug auf die anliegenden Zeichnungen näher erläutert. Es zeigen:
- Fig. 1a: eine Ansicht eines an einem Rotor einer elektrischen Maschine angeordneten Geberrades;
- Fig. 1b: eine 3-dimensionale Explosionsansicht eines erfindungsgemäßen Geberrades;
- Fig. 2a: eine schematische Darstellung einer Sensoranordnung mit Angabe der Lage von Schnittdarstellungen;
- Fig. 2b: eine Schnittdarstellung A-A eines Geberrades;
- Fig. 2c: eine Schnittdarstellung B-B eines Geberrades;
- Fig. 2d: eine Ansicht einer als geschlossene Fläche ausgebildeten Konturspur
- Fig. 2e: eine Ansicht einer aus identischen, separaten Elementen gebildeten Konturspur;

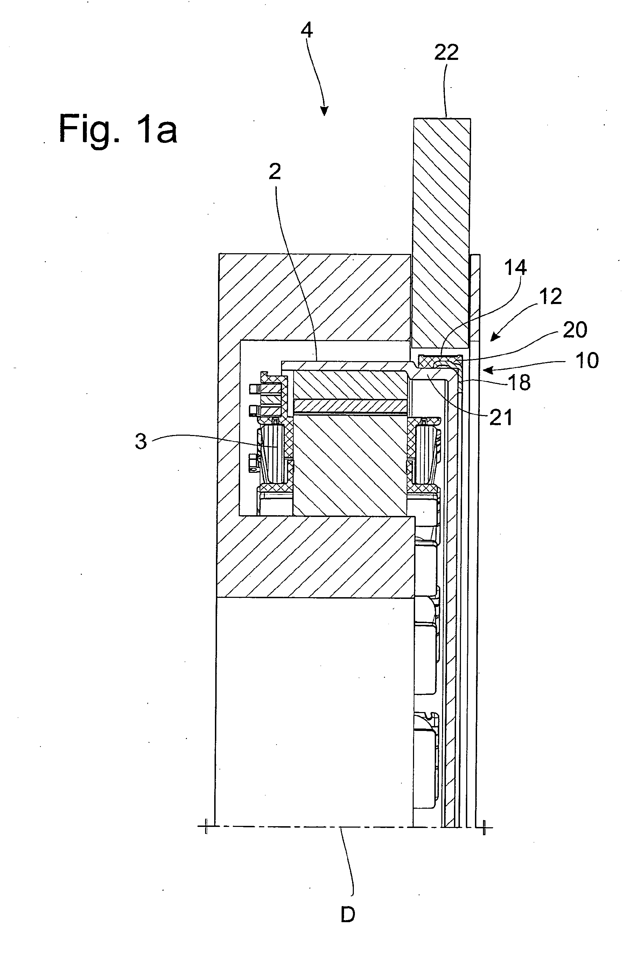

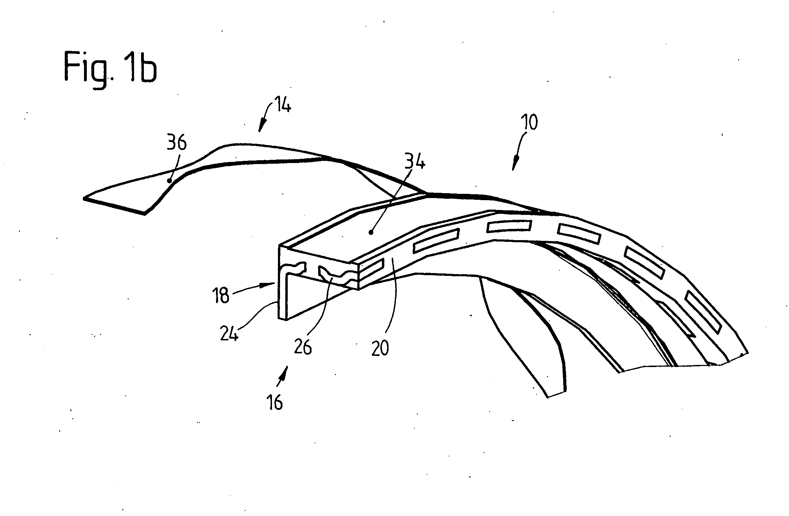

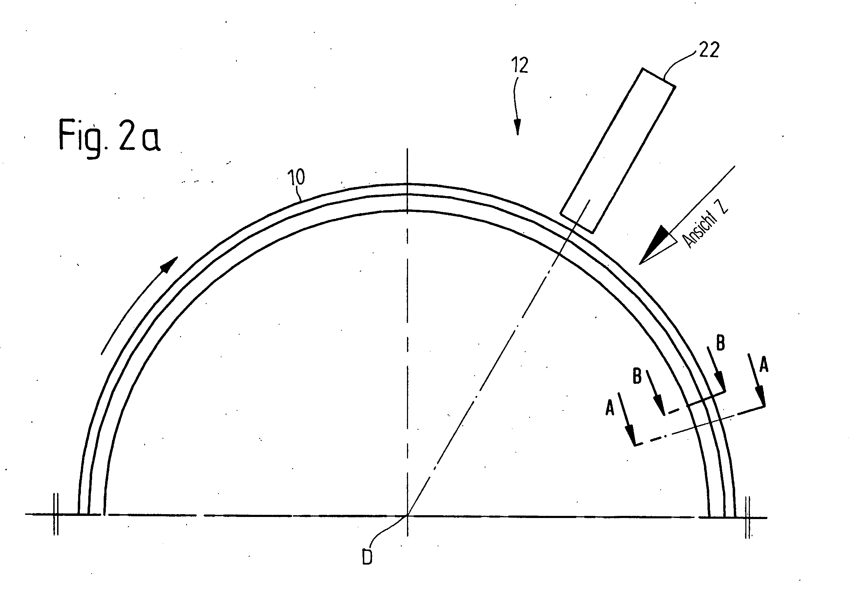

Die Figur 1 a zeigt ein Geberrad 10 für eine Wirbelstromsensoranordnung 12, wobei das Geberrad 10 am Rotor 2 einer als Starter-Generator ausgebildeten elektrischen Maschine 4 im Antriebsstrang eines Kraftfahrzeuges angeordnet und mit dem Rotor 2 um eine angedeutete Drehachse D drehbar ist. Die Wirbelstromsensoranordnung 1 2 dient dabei zur Ermittlung der Relativlage des Rotors 2 zu einem Stator 3 der elektrischen Maschine 4 und/oder zur Ermittlung von Drehzahlund Drehrichtungsinformationen, welche einer zeichnerisch nicht dargestellten Ansteuereinheit des Starter-Generators 4 und/oder einer Motorsteuerung eines mit dem Starter-Generator 4 zusammenwirkenden Verbrennungsmotors zugeführt werden. Das zur Montage am Rotor 2 vorgesehene Geberrad 10 besteht, wie in Fig. 1b dargestellt, aus einer im Wesentlichen flächenhaften Konturspur 14 aus einem elektrisch leitfähigen Material und aus einem Metall-Kunststoff-Verbundelement 16, das einen Metallring 18 und einen diesen zumindest teilweise umgebenden Kunststoffmantel 20 umfasst, wobei das Metall-Kunststoff-Verbundelement 16 insgesamt eine Tragestruktur 16 für die Konturspur 14 bildet. Die Konturspur 14 wird, wie dieses auch in Fig. 2a schematisch dargestellt ist von einem zu dem Geberrad 10 ortsfesten Wirbelstromsensor 22 abgetastet.

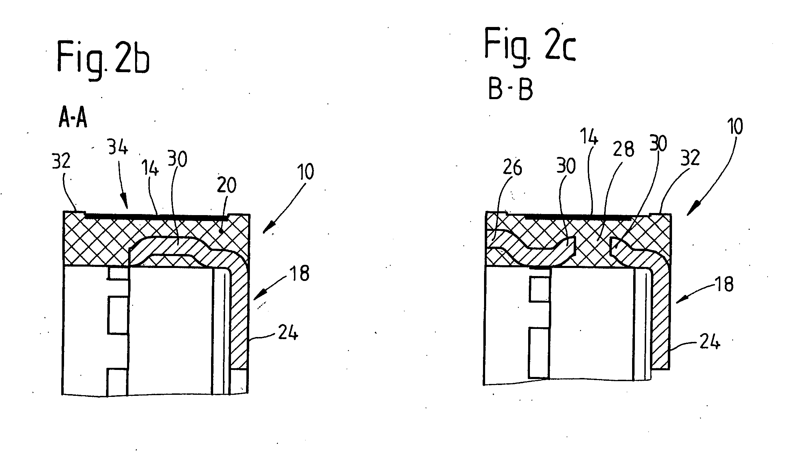

Wie besonders gut aus den Fig. 2b und 2c ersichtlicht, weist der Metallring 18 einen radialen Abschnitt 24 und einen sich hauptsächlich in axialer Richtung erstreckenden Abschnitt 26 auf, der den durch Spritzgießen eines thermoplastischen Werkstoffs erzeugten Kunststoffmantel 20 trägt. Am axialen Abschnitt 26 des Stahlrings 18 sind entlang des Umfangs mehrere Ausnehmungen 28 und radial hervortretende Abschnitte 30 ausgebildet, die im Verbundelementelement mit dem Kunststoffmantel 20 als Verankerungselemente wirken und dabei von diesem durchdrungen bzw. umgriffen werden.

Als Ausgangsmaterial für den Stahlring 18 dient ein bandförmiges Stahlblech, welches durch Stanzen und Rollieren zu einem Ring geformt wird. Die Verbindung der Endbereiche zu einem geschlossenem Ring kann beispielsweise in bekannter Art durch korrespondierende Formschlusselemente oder durch Schweißen, Löten oder ähnliches erfolgen.

Durch den radialen Abschnitt 24 des Stahlrings 18 wird der Metall-Kunststoff-Verbundelement 16 weiter versteift und dieser bildet gleichzeitig einen Anlagebereich zur axialen Festlegung an dem Rotor 2 der elektrischen Maschine 4.

In einer zeichnerisch nicht dargestellten, sich jedoch anhand der nachfolgenden Beschreibung und der Fig. 1a erschließenden Variante der Erfindung kann sich ein separater Ring 1 8 erübrigen, wenn der Rotor 2 bereits über ein geeignetes Trägerelement für den Kunststoffmantel 20 verfügt, wie dieses durch einen Rotorabschnitt 21 gegeben ist. Bei einer derartigen Lösung ist somit der Metallring 18 integral mit der rotierenden Komponente 2 ausgebildet und das bereits vorhandene Trägerelement 21 kann durch Vorsehen von Verankerungselementen, bspw. am Rotorumfang verteilte Sackbohrungen oder Stege, für den Formschluss mit dem Kunststoffmantel 20 bei Bedarf leicht angepasst werden. Das Metall-Kunststoff-Verbundelement 16 kann hierbei durch Umspritzen des Rotorabschnittes 21 mit einem thermoplastischen Kunststoff oder insbesondere durch Aufvulkanisieren eines Gummimaterials oder auch durch Aufschrumpfen eines vorgefertigten Kunststoffringes 20 erzeugt werden. Es ist weiterhin auch möglich, den Rotorabschnitt 21 mit einer dünnen Schicht eines temperaturbeständigen Lackes oder Harzes abzudecken und darauf die Konturspur anzuordnen.

Durch das Vorsehen einer allgemein als Isolationsdeckschicht zu bezeichnenden Zwischenschicht aus einem elektrisch nichtleitenden Material unmittelbar auf einem metallischen Trägerelement des Rotors 2 wird das Signal-Rausch-Verhältnis verbessert und in vielen Fällen die Gewinnung eines auswertbaren Nutzsignal erst ermöglicht.

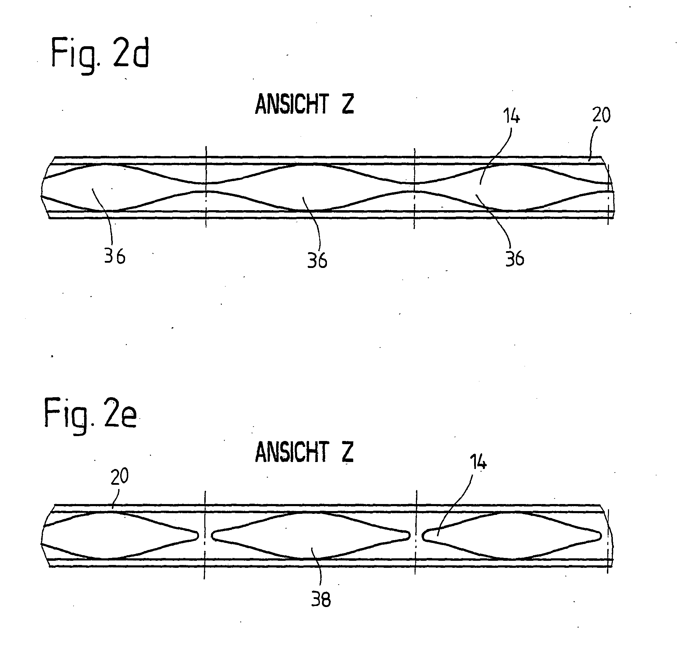

Gemäß der Fig. 2b und 2c weist die Außenumfangsfläche 32 des Kunststoffmantels 20 eine nach radial außen offene Aussparung 34 auf, in welcher die Konturspur 14 angeordnet ist. Die Konturspur 14 besteht aus einer dünnen elektrisch leitenden Folie, bevorzugt einer Kupferfolie, mit einer Dicke im Bereich von etwa 50 *µ*m bis etwa 150 *µ*m, vorzugsweise 100 *µ*m und ist als in sich geschlossene Fläche mit einem periodischen Muster 36 ausgebildet, welches in Fig. 2d die Einhüllende von zwei zueinander symmetrisch angeordneten Sinuskurven darstellt. Die Konturspur 14 wird erst nach Fertigstellung des Kunststoffmantels 20 an diesem mit einer Klebe- oder Prägetechnik, z.B. Heißprägen, aufgebracht. Mit einem derartigen Heißprägeschritt kann günstigerweise die zur Aufnahme der Konturspur erforderliche Aussparung 34 gleichzeitig miterzeugt werden, so dass sich ein sonst dafür notwendiger separater Arbeitsgang erübrigt. Alternativ zu einer in sich geschlossenen Konturspur 14 besteht gemäß Fig. 2e die Möglichkeit, diese aus einer Mehrzahl von identischen und räumlich voneinander getrennten Einzelelementen 38 zu gestalten. Die Elemente 38 sind geometrisch mit einer stetig veränderlich verlaufenden Kontur geformt, so dass sich für den Wirbelstromsensor 22 ein ebenfalls stetig veränderliches Signal ergibt. Durch diese Anordnung von Einzelelementen 38 können insbesondere Fehlpassungen des Anfangs- zum Endbereich, wie sich diese durch eine Fehlersummation bei der Aufbringung einer geschlossenen Konturspur 14 ergeben können, vermieden werden. Das Aufbringen der Einzelelemente 14 kann etwa durch eine automatisierte Anlage mit einem Teilkreisapparat erfolgen, wobei sich durch die Aufteilung identischer Winkelsegmente an dem Geberrad 10 ebenfalls identische Zwischenräume und/oder identische Überlappungsbereiche zwischen den Einzelelementen in Umfangsrichtung ergeben. Es genügt, wenn die Isolationsdeckschicht im Wesentlichen nur zwischen dem metallischen Träger und der elektrisch leitfähigen Schicht angeordnet ist. Wenn die leitfähige Schicht bereits über eine als Isolationsdeckschicht wirksame Klebeschicht verfügt, kann auf eine separat aufzubringende Isolationsdeckschicht verzichtet und die Herstellung der Konturspur weiter vereinfacht werden. Die Dicke der Isolationsdeckschicht kann bei einer gegebenen Sensorempfindlichkeit je nach dem vorhandenen Unterschied der elektrischen Leitfähigkeit der Konturspur zu derjenigen des metallischen Träger optimiert, das heißt erhöht oder verkleinert werden.

Zur definierten Lagezuordnung des Rotors 2 zu dem Geberrad 10 können bspw. konstruktive Merkmale des Rotors 2 und geometrische Merkmale der Konturspur 14 und/oder Markierungen in Form von Einprägungen oder aufgebrachten Symbolen dienen. Zur Markierung bestimmter Drehlagen kann es auch sinnvoll sein, die periodische Konturspur 14 an vorbestimmten Stellen räumlich zu unterbrechen oder geometrisch zu modifizieren.

Aus Bauraum- oder anderen Gründen kann es vorteilhaft sein, das Geberrad 10 nicht am Außenumfang, sondern axial endseitig oder an einer Axialschulter einer Rotorkomponente 2 anzuordnen. In diesem Fall wird anstelle eines sich axial erstreckenden ringförmigen Geberrades 10 ein sich hauptsächlich in radialer Richtung erstreckendes scheibenförmiges Geberrad benutzt, wobei die in den Figuren erläuterte Ausführungsform entsprechend anzupassen ist.

Bei einer Drehbewegung des mit dem Rotor 2 drehfest verbundenen Geberrades 10 detektiert der Wirbelstromsensor 22 die in dessen Erfassungsrichtung lateral veränderliche und zumindest stückweise stetig verlaufende Konturspur 14 und gewinnt daraus in bekannter Weise ein Signal für die aktuelle Drehlage des Rotors 2. Das heißt, das Sensorsignal repräsentiert zunächst die Stellung des Geberrades 10 zum Sensor 22 innerhalb einer Periode des Musters 36 der Konturspur 14. Daraus kann die Drehlage des Rotors 2 zum ortsfesten Stator 3 abgeleitet werden. Wird die elektrische Maschine 4 z.B. als permanenterregte Außenläufermaschine mit einer Mehrzahl magnetischer Polpaare ausgebildet, die jeweils aus zwei bezüglich der Ausrichtung des Magnetfeldes antiparallel orientierten Magnetelementen bestehen, so umfasst die Konturspur 14 eine zu den Polpaaren identische Anzahl von Perioden des Musters der Konturspur 14. Zur Gewinnung eines unverfälschten Sensorsignals besteht der Kunststoffmantel 20 aus einem im Wesentlichen elektrisch nicht leitfähigen Kunststoff. Weiterhin ist die Ausdehnung des Kunststoffmantels 20 in Wirkrichtung des Wirbelstromsensors 22 so bemessen, dass der Stahlring 18 im Wesentlichen außerhalb des Wirkungsbereichs des Wirbelstromsensors 22 angeordnet ist.

### Liste der verwendeten Bezugszeichen

- 2: Rotor
- 3: Stator
- 4: elektrische Maschine
- 10: Geberrad
- 12: Wirbelstromsensoranordnung
- 14: Konturspur
- 16: Metall-Kunststoff-Verbundelement, Tragestruktur
- 18: Metallring
- 20: Kunststoffmantel
- 21: Rotorabschnitt
- 22: Wirbelstromsensor
- 24: radialer Abschnitt
- 26: axialer Abschnitt
- 28: Ausnehmung
- 30: radial abstehende Abschnitte
- 32: Außenumfangsfläche
- 34: Aussparung
- 36: periodisches Muster
- 38: Einzelelement

## Patentansprüche

1. Geberrad für eine Wirbelstromsensoranordnung umfassend eine Konturspur aus einem elektrisch leitfähigen Material, die an einer rotierenden Komponente angeordnet ist und von einem zu dieser ortsfesten Wirbelstromsensor zur Gewinnung einer Drehbewegungsinformation abgetastet wird,
**dadurch gekennzeichnet, dass** das Geberrad (10) eine Tragestruktur aus einem Metall-Kunststoff-Verbundelement (16) mit einem Metallring (18) und mit einem diesen zumindest teilweise umgebenden Kunststoffmantel (20) aufweist, wobei die Konturspur (14) auf dem Kunststoffmantel (20) angeordnet ist.

2. Gebereinheit nach Anspruch 1,
**dadurch gekennzeichnet, dass** der Kunststoffmantel (20) an seiner Außenfläche eine Aussparung (34) aufweist, in der die Konturspur (14) angeordnet ist.

3. Geberrad nach einem der vorherigen Ansprüche,
**dadurch gekennzeichnet, dass** die Konturspur (14) als Folie ausgebildet ist.

4. Geberrad nach einem der vorherigen Ansprüche,
**dadurch gekennzeichnet, dass** die Konturspur (14) am Kunststoffmantel (20) als Klebe- oder Prägeteil ausgeführt ist.

5. Geberrad nach einem der vorherigen Ansprüche,
**dadurch gekennzeichnet, dass** die Konturspur (14) eine Mehrzahl von identischen, räumlich voneinander getrennten Einzelelementen (38) umfasst.

6. Geberrad nach einem der vorherigen Ansprüche,
**dadurch gekennzeichnet, dass** der Metallring (18) durch Rollieren eines gestanzten Metallbandes erzeugt wird, wobei dessen Endbereiche stoff- oder formschlüssig zu einem geschlossenem Ring miteinander verbunden sind.

7. Geberrad nach einem der vorherigen Ansprüche,
**dadurch gekennzeichnet, dass** der Metallring (18) integral mit der rotierenden Komponente 2 ausgebildet ist.

8. Geberrad nach einem der vorherigen Ansprüche,
**dadurch gekennzeichnet, dass** der Metallring (18) Verankerungselemente (28, 30) zur drehfesten und axial gesicherten Anordnung des Kunststoffmantels (20) aufweist.

9. Geberrad nach einem der vorherigen Ansprüche,
**dadurch gekennzeichnet, dass** der Metallring (18) einen sich radial erstreckenden Abschnitt (24) zur axialen Festlegung an der rotierenden Komponente 2 aufweist.

10. Geberrad nach einem der vorherigen Ansprüche,
**dadurch gekennzeichnet, dass** der Kunststoffmantel (20) als Spritzgussteil geformt ist.

11. Geberrad nach einem der vorherigen Ansprüche,
**dadurch gekennzeichnet, dass** der Kunststoffmantel (20) aus einem im Wesentlichen elektrisch nicht leitfähigen Kunststoff besteht, dessen Ausdehnung in Wirkrichtung des Wirbelstromsensors (22) so bemessen ist, dass der Metallring (18) im Wesentlichen außerhalb des Wirkungsbereichs des Wirbelstromsensors (22) angeordnet ist.
